# EUROPEAN PATENT SPECIFICATION

(11) **EP 2 283 089 B1**
(45) Date of publication and mention of the grant of the patent: **20.11.2013**
(21) Application number: 09754301.1
(22) Date of filing: 27.05.2009
(51) Int. Cl.: C09D 7/12, C08J 9/00, C08J 9/32

(54) **High-voltage generator with a rigid foam material**
Hochspannungsgenerator mit Hartschaummaterial
Générateur haute-tension comprenant un matériau à base de mousse rigide

(30) Priority: 27.05.2008 EP 08104118
(43) Date of publication of application: 16.02.2011
(73) Proprietor: Philips Intellectual Property & Standards GmbH, 20099 Hamburg (DE); Koninklijke Philips N.V., 5656 AE Eindhoven (NL)
(72) Inventor: NEGLE, Hans, NL-5656 AE Eindhoven (NL)
(74) Representative: van Velzen, Maaike Mathilde
(86) International application number: PCT/IB2009/052236
(87) International publication number: WO 2009/144675

(56) References cited:
- EP-A2- 1 371 700
- WO-A2-2008/029329
- WO-A2-2009/091292
- US-A- 6 054 651
- US-A1- 2005 124 708
- US-A1- 2007 087 116
- LI ET AL: "Development of rubberized syntactic foam" COMPOSITES PART A: APPLIED SCIENCE AND MANUFACTURING, ELSEVIER SCIENCE PUBLISHERS B.V., AMSTERDAM, NL, vol. 38, no. 6, 14 April 2007 (2007-04-14), pages 1483-1492, XP022040401 ISSN: 1359-835X
- MAHARSIA ET AL: "Enhancing tensile strength and toughness in syntactic foams through nanoclay reinforcement" MATERIALS SCIENCE AND ENGINEERING A: STRUCTURAL MATERIALS:PROPERTIES, MICROSTRUCTURE & PROCESSING, LAUSANNE, CH, vol. 454-455, 3 April 2007 (2007-04-03), pages 416-422, XP022344622 ISSN: 0921-5093

## Description

### FIELD OF THE INVENTION

The present invention relates to a high-voltage generator with a rigid foam material. Furthermore, the invention relates to an X-ray system with such a high voltage generator.

### BACKGROUND OF THE INVENTION

New types of electrically insulating housings for high voltage generators of X-ray systems may be made of so-called hybrid material or syntactic foam.

WO/2008/029329 describes a method for manufacturing a molded structure including the provisioning of a first mixture which includes microparticles and a liquid-phase mixture of resin and curing agent. The first mixture is centrifuged to extract a volume of the liquid-phase resin and curing agent mixture from the first mixture, the centrifuging process resulting in the formation of a liquid-phase matrix of microparticles which are at least partially- coated with liquid-phase resin and curing agent. The liquid-phase matrix of at least partially coated microparticles is cured to form a solid-phase matrix of microparticles, thereby providing the molded structure.

WO 03/074598 discloses a method for producing a syntactic rigid foam comprising a plurality of microspheres. The microspheres are implemented into a matrix material enclosing the microspheres. In order to densely pack the microspheres and to, thereby, achieve a low specific weight of the foam, for producing the foam, a mixture comprising a liquid matrix material and the microspheres is mixed within a container. After some time for relaxation of the microspheres in such mixture, the microspheres accumulate at the surface of the liquid matrix material. The liquid matrix material is then partly removed from the container such that the layer comprising the microspheres is finally arranged at the bottom surface of the container. Finally, the matrix material surrounding the microspheres is cured thereby forming a light-weighted, stable rigid foam material.

Due to its highly electrically insulating properties, such foam material can be used for example for isolation purposes within a high voltage generator which can be used for example in X-ray systems. For this purpose, a fluid mixture comprising the liquid matrix material and the microspheres can be filled in a mould for constituting the insulating element to be produced and, afterwards, this mixture can be cured for example by subjecting to elevated temperature conditions for a predetermined period of time. The resulting solid foam material is light weighted and has very good electrically insulating properties which are in principle the better the higher the content of microspheres is.

However, it has been found that the content of microspheres within the liquid matrix material conventionally should not be raised above 60 - 65 Vol.-%, as a liquid matrix material mixture comprising a higher content of microspheres would tend to have bad viscosity properties because of the high filling grade. Such high viscosity might result in deteriorated flowing behaviour which may lead to problems when filling a mould before the curing process. Additionally, with such high microspheres content, a de-gassing process of the resulting fluid mixture in order to remove gas bubbles or voids may be interfered.

### SUMMARY OF THE INVENTION

There may be a need for a method of preparing a rigid foam material wherein at least some of the above-described shortcomings of prior methods are at least partly overcome. Particularly, there may be a need for a method of preparing a rigid foam material wherein a liquid matrix material having a high content of microspheres contained therein can be easily handled and e.g. filled in a mould. Furthermore, there may be a need for a method of preparing a rigid foam material allowing to prepare foam materials which have a microspheres content in excess of the microspheres content in conventional rigid foam materials, for example in excess of 60 Vol.-%. Furthermore, there may be a need for a method of preparing a rigid foam material wherein a degassing process of a mixture containing the liquid matrix material and the microspheres may be improved. Furthermore, there may be a need for a rigid foam material prepared by such method, a high voltage generator with such rigid foam material and an X-ray system with such high voltage generator.

Furthermore, there may be need for a liquid resin material with a reduced viscosity.

These needs may be met by the subject-matter according to one of the independent claims. Advantageous embodiments of the present invention are described in the dependent claims.

According to a first aspect of the present invention, a high-voltage generator with a rigid foam material is proposed. The rigid foam is prepared with a method comprising: providing a curable liquid matrix material; mixing the liquid matrix material with a plurality of microspheres; adding nanoparticles to the matrix material; and curing a mixture comprising the matrix material, the microspheres and the nanoparticles.

It is to be noted that the steps of the method may be performed in the above-mentioned order, i.e. the matrix material is first mixed with the microspheres and then the nanoparticles are added to the resulting mixture. However, other orders of performing the method steps shall also be within the scope of the method according to the above first aspect of the invention.

A gist of the invention may be seen as being based on the following finding:

Surprisingly, the inventor of the present invention has found that by adding nanoparticles in a specific amount to a mixture comprising a liquid matrix material into which microspheres have been mixed at a high volume content, the viscosity of the overall mixture can be significantly reduced, for example by a factor of 3. For example, it has been observed that a mixture of a curable resin filled with 60 Vol.-% microspheres may have a viscosity of 12 Pas. By additionally adding 5 Vol.-% of nanoparticle filler, the viscosity was reduced by a factor of 3, in this case to 4 Pas. Accordingly, whereas the mixture without the additional nanoparticles could be hardly used for producing rigid foam components due to its reduced flowing properties, after adding the nanoparticles, the flowing properties could have been significantly enhanced such that the resulting mixture could be easily poured into a mould for preparing rigid foam elements.

Furthermore, it has been observed that the foam material prepared as outlined above has enhanced electrical insulation properties. In an approach to understand this effect, the inventor came to a model in which the enhanced electrical insulation properties may be attributed to improved the so-called "treeing". This means that when applying high voltages to a material including hollow spaces, free electrons may be accelerated and impact onto neighbouring particles. Thereby, the material may be deteriorated. By including additional nanoparticles, the free flight length of an electron before an impact may be reduced thereby reducing the kinetic energy of the electron and its deteriorating effect. Accordingly, the insulation properties may be enhanced.

In the following, further possible features, details and advantages of embodiments of the present invention are mentioned.

The term "rigid foam material" should be interpreted in a broad sense. It can comprise a cured matrix material in which "bubbles" or microspheres are enclosed. Therein, the wording "rigid" may be interpreted as "completely rigid" in a sense that the foam cannot be deformed without irreversibly destroying it. This may be attained if a solid, stiff cured matrix material such as a duroplastic material is used. However, the wording "rigid" may also be interpreted as "semi-rigid" in the sense that the foam can be elastically deformed up to a certain degree without irreversibly destroying it. This may be attained if a matrix material which remains elastic after curing is used, such as silicon.

The liquid matrix material may be a material which, under normal preparing conditions, is liquid such that it can be mixed with the microspheres and which, afterwards, can be cured such as to generate a rigid or semi-rigid matrix into which the microspheres are embedded. For example, the liquid matrix material can be a two-component material comprising a resin as a first component, e.g. an epoxy resin, which, e.g. by adding a binder or hardener as a second component, can be cured. Alternatively, the liquid matrix material can be one-component material which can be cured e.g. by applying energy e.g. in the form of thermal heat. As a further alternative, the liquid matrix material can be a polymer which, after mixing with the microspheres, can be cured by polymerization to generate a rigid matrix. Examples of possible matrix materials are polyurethane resin, polyester resin, epoxy resin or other duroplastic curable materials. Alternatively, also silicon or even thermoplastics may be used as matrix material.

The term "microspheres" should be interpreted in a broad sense herein. The microspheres can be hollow spheres comprising a gas, liquid and/or solid material or may be constituted from such materials and/or further comprising hollow spaces created for example by inflation with a blowing agent contained in the material. The "microspheres" may comprise a spherical shape but, alternatively, may also comprise other hollow shapes. In order to obtain a high packing density of the microspheres within the matrix material, a microspheres mixture comprising large and small microspheres can be used wherein the diameters of the microspheres may be selected such that the space between large microspheres may be occupied by corresponding small microspheres. For applications of rigid foam material for high voltage insulation material, microspheres having a diameter in the range of approximately 5 - 100 µm have proved particularly suitable. Therein, the large diameter microspheres may have a diameter of between 30 and 100 µm whereas the small diameter microspheres may have diameters in the range between 5 and 30 µm. However, particularly in cases where low specific weight is desired, also microspheres having a larger diameter up e.g. up to 1000µm may be used.

The microspheres may be produced for example from glass, ceramic or phenolic resin, an acrylonitrile copolymer or any other insulating material such as for example thermoplastic or duroplastic plastic material.

The microspheres may comprise a gas such as for example sulphur hexafluoride (SF₆) or isopentane or another gas. The gas may be under an elevated or reduced pressure, depending on the size of the microspheres, in order to improve the high voltage capacity and/or the rigidity against exterior pressure. Depending on the application it may be advantageous to replace at least a part of the hollow microspheres by spheres comprising a solid and/or liquid material. Details of the generation of microspheres are known in the art and will not be explained herein.

The nanoparticles added to the liquid matrix material can be any small particles having dimensions below the micrometer scale. For example, the nanoparticles may have a size of between 1 and 500 nm, preferably a size between 5 and 100 nm. The nanoparticles may have any 1-, 2- or 3-dimensional structure such as nanotubes, nanoplates, nanoballs, nanograins or any other structure. It may be important to ensure that the nanoparticles are prepared and handled in such a way that they do not tend to agglomerate or agglutinate before or after mixing them to the matrix material. Otherwise, the built up agglomeration might not behave as nanoparticles but as microparticles which might not have the same advantageous effects as nanoparticles.

The binder to be added to a two-component matrix material can be a substance which may initiate or enhance the curing of the liquid matrix material in order to finally form a solid matrix material.

The curing of the mixture comprising the matrix material, the microspheres, the nanoparticles and, optionally , a binder may be performed after the mixture has been filled in a corresponding mould representing the geometry of a rigid foam element to be prepared. The curing process may be initiated or supported by providing energy to the mixture for example in the form of exterior heat. Additionally or alternatively, the curing may be initiated or enhanced by provision of additional chemical substances.

Additionally to the above-mentioned substances and materials, further substances can be added to the components forming the rigid foam material. For example, known wetting and/or dispersing additives may be introduced in order to control the thixotropy and/or viscosity of the material mixture. Furthermore, an adhesion promotor may be added in order to improve the adhesion of the microspheres to the matrix material such that the high voltage stability of the resulting insulating rigid foam material may be further increased. In case of a microsphere made from glass or ceramic, the adhesion to the polymer or resin matrix can be increased by a silanisation with about 0,1 to 0,3 %. If the microspheres are made of a plastic, the adhesion to a polymer matrix may be improved by coating the plastic spheres with calcium carbonate.

According to an embodiment of the present invention, the nanoparticles are added in an amount of between 0.5 and 20 Vol.-%, preferably in an amount of between 1 and 10 Vol.-% , more preferably in an amount of between 3 and 6 Vol.-% and even more preferably in an amount of between 4 and 5 Vol.-% with respect to the volume of the matrix material after adding the microspheres. It has been found that such amount of added nanoparticles can advantageously reduce the viscosity of the resulting mixture. Adding less than 1 Vol.-% of nanoparticles will not reduce the viscosity substantially whereas adding more than 10 Vol.-% may have other adversal effects.

According to another embodiment of the present invention, the nanoparticles comprise at least one material out of the group comprising AlN (aluminium nitride), Al₂O₃ (dialuminium trioxide), MgO (magnesium oxide), SiC (silicon carbide), SiO₂ (silicon dioxide), TiO₂ (titanium dioxide), ZnO (zinc oxide), C (carbon or diamond), silicon nanopowder or cloisite® nanoclays. Nanoparticles of such materials have been found to disclose advantageous influence on the viscosity properties of the mixture comprising the matrix material and the microspheres.

In detail, the AlN nanoparticles may have a size of less than 100 nm and a molar weight of 40,99. The Al₂O₃ nanoparticles can be provided in the form of an n-powder or of a 10 wt% dispersion in water wherein the particles may have a size of less than 50 nm and a molar weight of 101,96. Nanoparticles comprising MgO may have a particle size of less than 50 nm and a molar weight of 40,3. Nanoparticles of SiC may have a particle size of less than 100 nm and a molar weight of 40,1. Nanoparticles of SiO₂ may be spherical or porous and may have a particle size of 5 - 15 nm or they may be provided as a nanopowder or on a metal basis than having a particle size of 10 to 20 nm and, in both cases, having a molar weight of 60,08. Nanoparticles of TiO₂ may be provided as rutile and may have a particle size of 10x40 nm and a molar weight of 79,87. Nanoparticles made of ZnO may have a particle size of less than 100 nm and a molar weight of 81,39, or, in case the ZnO is doped with 6 % Al, the particle size may be less than 50 nm. Nanoparticles made of C may have a particle size of less than 50 nm and a molar weight of 12,01. In case, the nanoparticles are made of C in a diamond-structure or on a metal basis, the particle size may be less than 10 nm again at a molar weight of 12,01. Nanoparticles made from silicon nanopowder may have a particle size of less than 100 nm at a molar weight of 28,09. Alternatively, nanoparticles or nanoclays can be made of cloisite® 30B which can be provided at very low costs.

According to a further embodiment of the present invention, the nanoparticles are added to the matrix material in form of a dry powder. Such dry powder can be easily mixed to the liquid matrix material, which optionally already comprises the microspheres, by stirring.

According to another embodiment of the present invention, the nanoparticles are added to the matrix material in form of a liquid solution comprising a solvent in which nanoparticles are contained. As such solution is liquid, it can be easily mixed with the liquid matrix material. The solvent can either be removed from the resultant mixture for example by de-gassing or it can remain in the mixture and be included in the final rigid foam material. The nanoparticles can be mixed into and dispersed within the solvent by stirring. Alternatively, the nanoparticles can be originally grown within the solvent. Such solutions may be obtained e.g. by the well-known Solgel method. For example, by such in-situ growing, a solution comprising up to 40 Vol.-% of nanoparticles can be provided. The nanoparticle-containing solution may be provided e.g. as one component of a resin or a binder of the curable matrix material.

In any case, the nanoparticles should be equally dispersed or distributed homogeneously within the matrix material in order to ensure homogeneous viscosity properties of the resulting mixture. It should be ensured that nanoparticles do not agglomerate to larger clusters.

According to a further embodiment of the present invention, the microspheres are mixed to the matrix material in an amount of more than 60 Vol.-%, preferably more than 65 Vol.-% and more preferably more than 70 Vol.-% with respect to the volume of the matrix material. The amount of microspheres may be raised up to 90 Vol-%. Whereas in conventional methods for preparing a rigid foam material, such high contents of microspheres would lead to a very high viscosity which would prevent suitable handling of the mixture for example for filling of moulds, by adding the nanoparticles, it can be achieved that even with such high content of microspheres, the resulting mixture can still be handled and e.g. filled into a mould. The resulting rigid foam material having such high microspheres content advantageously may have a reduced weight and may have improved electrical insulating properties.

According to a further embodiment of the present invention, the method further comprises the step of de-gassing a mixture comprising at least the matrix material, the microspheres and the nanoparticles and which, furthermore, may comprise a binder and/or further additives. De-gassing might be important in order to get out air bubbles or voids from within the mixture comprising the liquid matrix material and the microspheres before curing the mixture. As the viscosity of the mixture is reduced by adding the nanoparticles, such de-gassing might be performed at increased speed compared to prior art methods having no nanoparticles added.

The liquid (matrix) material used in the proposed methods may be specially adapted for preparing a rigid foam material. For example, insulation properties may be chosen specifically such that the resulting rigid foam material may be used for insulating a high voltage generator. However, also other liquid materials may be used such as e.g. resin, varnish, coating, filler, etc. Such liquid material may be used for coating, painting, filling, bonding or sealing objects. For example, liquid wood coating products e.g. for the construction industry may use a liquid resin for coating a surface of a wooden product. As the surface of a wooden product may be porous, enhancing the viscosity of a liquid wood coating product may improve a penetration of the liquid wood coating product into pores of the wood product thereby possibly enhancing adhesion and preventing delamination thereof.

According to further aspects of the present invention, a rigid foam material prepared with the above described method, a high voltage generator comprising such rigid foam material and an X-ray system with such high voltage generator are provided. The rigid foam material prepared by the above-described method in one of its embodiments may have a very low specific weight of e.g. approximately 0.5g/cm³ and, furthermore, may have very good electrically insulating properties. This may be at least partly due to the possible high content of microspheres within the matrix material and, furthermore, to the advantageous de-gassing properties due to the reduced viscosity as a result of the addition of the nanoparticles. Therefore, the resultant rigid foam material can be used as high voltage insulation material for example in a high voltage generator or high voltage power supply unit which then may be used for example in stationary as well as in movable, e.g. rotating, X-ray systems. For example, before curing, the mixture comprising the liquid matrix material, the microspheres and the nanoparticles and, optionally, the binder may be used as a moulding material which may be moulded to a structure having recesses into which high voltage components may be accommodated thereby ensuring electrical insulation against their surrounding.

It has to be noted that aspects and embodiments of the invention have been described with reference to different subject-matters. In particular, some embodiments have been described with reference to the method type claims whereas other embodiments have been described with reference to apparatus type claims. However, a person skilled in the art will gather from the above and the following description that, unless other notified, in addition to any combination or features belonging to one type of subject-matter also any combination between features relating to different subject-matters, in particular between features of the apparatus type claims and features of the method type claims, is considered to be disclosed with this application.

## Claims

1. A high voltage generator, particularly for use in a rotating X-ray system, with a rigid foam material prepared with a method comprising:
- providing a curable liquid matrix material;
- mixing the liquid matrix material with a plurality of microspheres;
- adding nanoparticles to the matrix material; and
- curing a mixture comprising the matrix material, the microspheres and the nanoparticles.

2. The high voltage generator according to claim 1, wherein the liquid matrix material or the liquid material comprises at least one of a curable two-component resin, a curable one-component resin, a polymer, a duroplastic material, a thermoplastic material or silicon.

3. The high voltage generator according to one of claims I to 2, wherein nanoparticles are added in an amount of between 1 and 10 vol% with respect to the volume of the matrix material.

4. The high voltage generator according to one of claims 1 to 3, wherein the nanoparticles have a size of between 1 and 500nm.

5. The high voltage generator according to one of claims 1 to 4, wherein the nanoparticles comprise at least one material out of the group comprising AlN, Al₂O₃, MgO, SiC, SiO₂, TiO₂, ZnO, C, Silicon nanopowder and nanoclays.

6. The high voltage generator according to one of claims 1 to 5, wherein, in the method, the nanoparticles are added to the matrix material in form of a dry powder.

7. The high voltage generator according to one of claims 1 to 6, wherein, in the method, the nanoparticles are added to the matrix material in form of a solution comprising a solvent in which nanoparticles are contained.

8. The high voltage generator according to claim 7, wherein the solution comprises less than 40 vol% of nanoparticles.

9. The high voltage generator according to one of claims 1 to 8, wherein, in the method, micropheres are mixed to the matrix material in an amount of more than 60 vol% with respect to the volume of the matrix material.

10. The high voltage generator according to one of claims 1 to 9, the method further comprising degassing a mixture comprising at least the matrix material, the microspheres and the nanoparticles.

11. An X-ray system with a high voltage generator according to one of claims 1 to 10.

## Patentansprüche

1. Hochspannungsgenerator insbesondere für den Einsatz in einem rotierenden Röntgensystem mit einem Hartschaummaterial, das mit einem Verfahren hergestellt wird, das die folgenden Schritte umfasst:
- Bereitstellen eines härtenden, flüssigen Matrixmaterials,
- Mischen des flüssigen Matrixmaterials mit einer Vielzahl von Mikrokügelchen,
- Zusetzen von Nanoteilchen zum Matrixmaterial und
- Härten eines Gemisches, das das Matrixmaterial, die Mikrokügelchen und die Nanoteilchen enthält.

2. Hochspannungsgenerator nach Anspruch 1, wobei das flüssige Matrixmaterial oder das flüssige Material zumindest entweder ein härtendes Zweikomponentenharz, ein härtendes Einkomponentenharz, ein Polymer, ein duroplastisches Material, ein thermoplastisches Material oder Silizium umfasst.

3. Hochspannungsgenerator nach einem der Ansprüche 1 bis 2, wobei die Nanoteilchen in einem Anteil zwischen 1 und 10 % Vol. in Bezug auf das Volumen des Matrixmaterials zugesetzt werden.

4. Hochspannungsgenerator nach einem der Ansprüche 1 bis 3, wobei die Nanoteilchen eine Größe zwischen 1 und 500 nm haben.

5. Hochspannungsgenerator nach einem der Ansprüche 1 bis 4, wobei die Nanoteilchen zumindest einen Werkstoff aus der Gruppe bestehend aus AIN, Al₂O₃, MgO, SiC, SiO₂, TiO₂, ZnO, C, Silizium-Nanopulver und Nanoton enthalten.

6. Hochspannungsgenerator nach einem der Ansprüche 1 bis 5, wobei in dem Verfahren die Nanoteilchen dem Matrixmaterial in Form von trockenem Pulver zugesetzt werden.

7. Hochspannungsgenerator nach einem der Ansprüche 1 bis 6, wobei in dem Verfahren die Nanoteilchen dem Matrixmaterial in Form einer Lösung zugesetzt werden, die ein Lösungsmittel enthält, in dem Nanoteilchen enthalten sind.

8. Hochspannungsgenerator nach Anspruch 7, wobei die Lösung weniger als 40 % Vol. Nanoteilchen enthält.

9. Hochspannungsgenerator nach einem der Ansprüche 1 bis 8, wobei in dem Verfahren Mikrokügelchen mit dem Matrixmaterial in einem Anteil von mehr als 60 % Vol. in Bezug auf das Volumen des Matrixmaterials gemischt werden.

10. Hochspannungsgenerator nach einem der Ansprüche 1 bis 9, wobei das Verfahren ferner das Entgasen eines Gemisches mit zumindest dem Matrixmaterial, den Mikrokügelchen und den Nanoteilchen umfasst.

11. Röntgensystem mit einem Hochspannungsgenerator nach einem der Ansprüche 1 bis 10.

## Revendications

1. Générateur haute tension, particulièrement destiné à une utilisation dans un système de radiologie rotatif, avec un matériau de mousse rigide préparé avec un procédé comprenant :
- la fourniture d'un matériau de matrice liquide durcissable ;
- le mélange du matériau de matrice liquide avec une pluralité de microsphères ;
- l'ajout de nanoparticules au matériau de matrice ; et
- le durcissement d'un mélange comprenant le matériau de matrice, les microsphères et les nanoparticules.

2. Générateur haute tension selon la revendication 1, dans lequel le matériau de matrice liquide ou le matériau liquide comprend au moins l'un d'une résine à deux composants durcissable, une résine à un composant durcissable, un polymère, un matériau thermodurcissable, un matériau thermoplastique ou du silicium.

3. Générateur haute tension selon l'une des revendications 1 à 2, dans lequel des nanoparticules sont ajoutées dans une quantité entre 1 et 10% en volume par rapport au volume du matériau de matrice.

4. Générateur haute tension selon l'une des revendications 1 à 3, dans lequel les nanoparticules ont une taille entre 1 et 500 nm.

5. Générateur haute tension selon l'une des revendications 1 à 4, dans lequel les nanoparticules comprennent au moins un matériau dans le groupe se composant d'AIN, Al₂O₃, MgO, SiC, SiO₂, Ti0₂, ZnO, C, nano-poudre de silicium et nano-argiles.

6. Générateur haute tension selon l'une des revendications 1 à 5, dans lequel, dans le procédé, les nanoparticules sont ajoutées au matériau de matrice sous forme d'une poudre sèche.

7. Générateur haute tension selon l'une des revendications 1 à 6, dans lequel, dans le procédé, les nanoparticules sont ajoutées au matériau de matrice sous forme d'une solution comprenant un solvant dans lequel des nanoparticules sont contenues.

8. Générateur haute tension selon la revendication 7, dans lequel la solution comprend moins de 40% en volume de nanoparticules.

9. Générateur haute tension selon l'une des revendications 1 à 8, dans lequel, dans le procédé, des microsphères sont mélangées au matériau de matrice dans une quantité de plus de 60% en volume par rapport au volume du matériau de matrice.

10. Générateur haute tension selon l'une des revendications 1 à 9, le procédé comprenant en outre le dégazage d'un mélange comprenant au moins le matériau de matrice, les microsphères et les nanoparticules.

11. Système de radiologie avec un générateur haute tension selon l'une des revendications 1 à 10.
